# EUROPÄISCHE PATENTSCHRIFT

(11) **EP 2 809 848 B1**
(45) Veröffentlichungstag und Bekanntmachung des Hinweises auf die Patenterteilung: **20.04.2016**
(21) Anmeldenummer: 13703357.7
(22) Anmeldetag: 31.01.2013
(51) Int. Cl.: E01C 19/28, E02D 3/074

(54) **VERDICHTERWALZE FÜR EINEN BODENVERDICHTER**
COMPACTOR ROLLER FOR A SOIL COMPACTOR
CYLINDRE DE COMPACTAGE POUR ENGIN DE COMPACTAGE DE SOL

(30) Priorität: 01.02.2012 DE 102012201443
(43) Veröffentlichungstag der Anmeldung: 10.12.2014
(73) Patentinhaber: Hamm AG, 95643 Tirschenreuth (DE)
(72) Erfinder: FISCHER, Richard, 95671 Bärnau (DE); KOLBERG, Günter, 92637 Weiden (DE); RATH, Günter, 95505 Immenreuth (DE); DAGNER, Josef, 92665 Altenstadt/Wn (DE)
(74) Vertreter: RLTG
(86) Internationale Anmeldenummer: PCT/EP2013/051902
(87) Internationale Veröffentlichungsnummer: WO 2013/113819

(56) Entgegenhaltungen:
- CN-A- 1 407 179
- CN-U- 201 753 426
- CN-Y- 2 525 116
- JP-A- 2004 263 486

## Beschreibung

Die vorliegende Erfindung betrifft eine Verdichterwalze gemäß dem Oberbegriff des Anspruchs 1.

Ein derartiger Bodenverdichter umfasst im Allgemeinen wenigstens eine Verdichterwalze, mit welcher der Bodenverdichter sich über das zu verdichtende Bodenmaterial hinweg bewegt und dieses unter Einwirkung der Gravitationskraft durch Druck verdichtet. Um das Verdichtungsergebnis verbessern zu können, ist es bekannt, die Verdichterwalze in Schwingung zu versetzen. Ein derartiger Schwingungszustand ist ein Vibrationszustand, also ein Zustand, in welchem die Verdichterwalze zu einer periodischen Auslenkbewegung radial zu ihrer Verdichterwalzendrehachse, insbesondere einer periodischen Auf- und Abbewegung im Wesentlichen in Vertikalrichtung angeregt wird. Ein anderer Schwingungszustand ist eine Oszillationsbewegung, bei welcher eine Verdichterwalze zur periodischen Hin- und Herbewegung in Umfangsrichtung um ihre Verdichterwalzendrehachse angeregt wird.

Aus der EP 0 053 598 B1 ist ein Bodenverdichter mit einer Verdichterwalze bekannt, die hinsichtlich ihres Schwingungsanregungszustandes umgeschaltet werden kann zwischen einer Oszillationsbewegung und einer Vibrationsbewegung. Zu diesem Zwecke sind im Inneren der Verdichterwalze zwei zur Verdichterwalzendrehachse exzentrisch und parallel dazu sich erstreckende Unwuchtwellen vorgesehen. Diese werden durch einen Antriebsmotor und eine zur Verdichterwalzendrehachse koaxiale Antriebswelle über jeweilige Riementriebe zur Drehung in der gleichen Drehrichtung angetrieben. An jeder Unwuchtwelle sind beispielsweise in axialem Abstand zwei Unwuchtmassen vorgesehen. Um zwischen den verschiedenen Schwingungsanregungszuständen, also einer Vibrationsbewegung und einer Oszillationsbewegung umschalten zu können, sind die Unwuchtmassen an einer der Unwuchtwellen fest vorgesehen, während bei der anderen Unwuchtwelle die daran vorgesehen Unwuchtmassen sich in einem Winkelbereich von 180° bezüglich der zugeordneten Unwuchtwelle um deren Drehachse bewegen können. Durch Drehrichtungsumkehr der Unwuchtwellen kann somit die Phasenlage der an den verschiedenen Unwuchtwellen vorgesehenen Unwuchtmassen zueinander verschoben werden, so dass je nach Drehrichtung das System zum Erzeugen einer Vibrationsbewegung, also einer Radialbewegung bezüglich der Verdichterwalzendrehachse, genutzt werden kann, oder zum Erzeugen einer Oszillationsbewegung, also einer Umfangsbewegung um die Verdichterwalzendrehachse, wobei selbstverständlich jede dieser Bewegungen mit einer dafür vorgesehenen Frequenz periodisch durchgeführt wird.

Eine Verdichterwalze mit den Merkmalen des Oberbegriffs des Anspruchs 1 ist aus der Druckschrift JP 2004 263 486 A bekannt.

Es ist die Aufgabe der vorliegenden Erfindung, eine Verdichterwalze für einen Bodenverdichter vorzusehen, mit welcher ein verbessertes Verdichtungsergebnis erzielt werden kann.

Erfindungsgemäß wird diese Aufgabe gelöst durch eine im Anspruch 1 definierte Verdichterwalze für einen Bodenverdichter, umfassend eine Oszillationsmassenanordnung mit wenigstens einer um eine zu einer Verdichterwalzendrehachse exzentrische Oszillationswellendrehachse drehbaren Oszillationswelle mit wenigstens einer Oszillationsunwuchtmasse und eine Vibrationsmassenanordnung mit einer um eine Vibrationswellendrehachse drehbaren Vibrationswelle mit wenigstens einer Vibrationsunwuchtmasse. Zur Erzeugung von periodischen Oszillationen bzw. Vibrationen mit der jeweils hierfür gewünschten bzw. vorteilhaften Frequenz sind wenigstens eine Oszillationswelle und die Vibrationswelle in der Verdichterwalze zur Drehung antreibbar getragen.

Auch bei der erfindungsgemäß aufgebauten Verdichterwalze können, angepasst an die Erfordernisse, verschiedene Schwingungszustände, also sowohl eine Oszillationsbewegung, als auch eine Vibrationsbewegung, hervorgerufen werden, jedoch vermittels voneinander unabhängig aufgebauter und ggf. auch unabhängig betreibbarer Anordnungen, nämlich der Oszillationsmassenanordnung einerseits und der Vibrationsmassenanordnung andererseits. Somit wird es möglich, jede dieser Massenanordnungen hinsichtlich der durch sie hervorzurufenden Schwingungsbewegung bzw. Schwingungsanregung jeweils unabhängig von der anderen Massenanordnung optimiert ausgestalten zu können. Somit kann ein Zustand vermieden werden, bei welchem die in der Verdichterwalze vorhandene Unwucht für einen Schwingungszustand von Oszillationsbewegung und Vibrationsbewegung eine zu geringe Masse bzw. auch eine unpassende Eigenfrequenz aufweist, während sie für den anderen Schwingungszustand von Oszillationsbewegung und Vibrationsbewegung eine zu hohe Masse und ggf. gleichermaßen eine unpassende Eigenfrequenz aufweist.

Da die Vibrationswelle und wenigstens eine Oszillationswelle, vorzugsweise alle Oszillationswellen, in der Verdichterwalze zur Drehung antreibbar getragen sind, wird bei Rotation der Vibrationswelle und der Oszillationswellen um ihre jeweiligen Drehachsen eine aus der Rotation der Verdichterwalze um ihre Verdichterwalzendrehachse resultierende Rotationsbewegung überlagert. Dies führt zu einer Drehzahlverschiebung insbesondere der Oszillationswellen mit der Gefahr, dass die allgemein vorgesehene Abstimmung zwischen der Rotationsbewegung der Vibrationswelle und der Rotationsbewegung der Oszillationswellen beeinträchtigt wird bzw. verlorengeht. Um dies zu vermeiden, ist ein Wellenantrieb zum Antreiben wenigstens einer Oszillationswelle zur Drehung um deren Oszillationswellendrehachse vorgesehen, wobei der Wellenantrieb einen Antriebsmotor und eine Übertragungsgetriebeanordnung umfasst, wobei ein Drehzahlumsetzverhältnis der Übertragungsgetriebeanordnung in Abhängigkeit von einer Drehzahl der Verdichterwalze um die Verdichterwalzendrehachse variiert. Bei diesem Aufbau kann also durch die Veränderung des Drehzahlumsetzverhältnisses der Übertragungsgetriebeanordnung abhängig von der Drehzahl der Verdichterwalze eine Anpassung der Drehzahl der bzw. aller Oszillationswellen erreicht werden, so dass unabhängig vom Rotationszustand der Verdichterwalze selbst eine vorgesehene Abstimmung zwischen der Drehbewegung der Oszillationswellen einerseits und der Verdichterwelle andererseits beibehalten bleiben kann.

Dabei ist es besonders vorteilhaft, wenn bei nicht um die Verdichterwalzendrehachse rotierender Verdichterwalze ein Drehzahlumsetzverhältnis der Übertragungsgetriebeanordnung 2:1 ist. Damit kann berücksichtigt werden, dass grundsätzlich eine Schwingungsperiode einer Oszillationsbewegung der Verdichterwalze eine Hin- und eine Herbewegung der Verdichterwalze im Wesentlichen in horizontaler Richtung umfasst. Während dieser Hin- und Herbewegung ist es vorteilhaft, wenn die Vibrationswelle zwei Perioden durchläuft, eine für die Hin-Oszillationsbewegung und eine für die Her-Oszillationsbewegung. Somit ist es möglich, für den Antrieb der Vibrationswelle und den Antrieb der bzw. jeder Oszillationswelle den gleichen Antriebsmotor zu verwenden. Durch die grundsätzlich vorgegebene Drehzahluntersetzung im Verhältnis 2:1 für die Oszillationswellen kann also grundsätzlich eine derartige Abstimmung vorgegeben werden, dass die Vibrationswelle mit der doppelten Drehzahl rotiert, wie die bzw. jede Oszillationswelle. Ausgehend von diesem Grund-Drehzahlumsatzverhältnis kann dann eine abhängig von der Drehzahl der Verdichterwalze erfolgende Variation des Drehzahlumsetzverhältnisses vorgenommen werden, um den vorangehend erläuterten Überlagerungseffekt zu kompensieren.

Zur effizienten Übertragung der durch die Vibrationsmassenanordnung generierten Vibrationen auf die Verdichterwalze wird vorgeschlagen, dass die Vibrationswellendrehachse zur Verdichterwalzendrehachse im Wesentlichen konzentrisch ist.

Um den im Inneren einer Verdichterwalze vorhandenen Raum möglichst effizient nutzen zu können, wird vorgeschlagen, dass die Oszillationswellendrehachse wenigstens einer Oszillationswelle zur Vibrationswellendrehachse oder/und zur Verdichterwalzendrehachse im Wesentlichen parallel ist.

Da der vorangehend erläuterte Überlagerungseffekt davon abhängt, in welcher Richtung die Verdichterwalze sich um ihre Verdichterwalzendrehachse dreht, wird weiter vorgeschlagen, dass bei Drehung der Verdichterwalze in einer ersten Drehrichtung das Drehzahlumsetzverhältnis der Übertragungsgetriebeanordnung bezüglich eines bei nicht um die Verdichterwalzendrehachse rotierender Verdichterwalze vorgesehenen Grund-Drehzahlumsetzverhältnisses erhöht ist und bei Drehung der Verdichterwalze in einer zur ersten Drehrichtung entgegengesetzten zweiten Drehrichtung das Drehzahlumsetzverhältnis der Übertragungsgetriebeanordnung bezüglich des Grund-Drehzahlumsatzverhältnisses verringert ist.

Ein sehr stabiler und die Variation des Drehzahlumsetzverhältnisses abhängig von der Drehzahl der Verdichterwalze in einfacher Weise zulassender Aufbau der Übertragungsgetriebeanordnung kann ein Planetengetriebe, vorzugsweise mit drei Planetengetriebeeinheiten jeweils mit Sonnenrad, Hohlrad und damit in Kämmeingriff stehenden Planetenrädern an einem Planetenradträger, mit einer Getriebeeingangswelle und einer Getriebeausgangswelle umfassen.

Zur Ankopplung der bzw. jeder Oszillationswelle an die Getriebeausgangswelle des Planetengetriebes wird vorgeschlagen, dass die Übertragungsgetriebeanordnung in Zuordnung zu jeder Oszillationswelle jeweils einen Riementrieb mit einer durch die Getriebeausgangswelle zur Drehung antreibbaren Antriebsscheibe und einer die Oszillationswelle zur Drehung antreibenden Abtriebsscheibe und wenigstens einem Übertragungsriemen umfasst, wobei vorzugsweise ein Drehzahlumsetzverhältnis jedes Riementriebs 2:1 ist. Wenn der Aufbau derart gewählt ist, dass das Drehzahlumsetzverhältnis der Riementriebe 2:1 ist, wird das vorangehend erläuterte Drehzahlumsetzverhältnis der Übertragungsgetriebeanordnung von 2:1 grundsätzlich alleine durch die Ausgestaltung der Riementriebe erlangt. Dies bedeutet, dass das Planetengetriebe derart ausgebildet sein kann, dass bei nicht um die Verdichterwalzendrehachse rotierender Verdichterwalze das Planetengetriebe ein Drehzahlumsetzverhältnis von 1:1 vorsieht, die Getriebeausgangswelle also mit der gleichen Drehzahl rotiert, wie die Getriebeeingangswelle.

Das Planetengetriebe kann zur Einleitung des Antriebsdrehmoments über die Antriebswelle eine erste Planetengetriebeeinheit mit einem mit der Getriebeeingangswelle drehfesten ersten Sonnenrad, einem drehfest angeordneten ersten Hohlrad und an einem ersten Planetenradträger drehbar getragenen ersten Planetenrädern umfassen.

Zur Abgabe eines Drehmoments aus dem Planetengetriebe kann dieses ferner eine zweite Planetengetriebeeinheit mit einem an der Getriebeausgangswelle drehfesten zweiten Sonnenrad, einem zweiten Hohlrad und an einem zweiten Planetenradträger drehbar getragenen zweiten Planetenrädern umfassen.

Um dabei eine Drehmomentübertragungsverbindung zwischen der ersten Planetengetriebeeinheit und der zweiten Planetengetriebeeinheit realisieren zu können, wird vorgeschlagen, dass der erste Planetenradträger und der zweite Planetenradträger durch einen gemeinsamen Planetenradträger der ersten Planetengetriebeeinheit und der zweiten Planetengetriebeeinheit bereitgestellt sind.

Um in Abhängigkeit vom Rotationszustand der Verdichterwalze das Drehzahlumsatzverhältnis des Planetengetriebes variieren zu können, wird weiter vorgeschlagen, dass eine dritte Planetengetriebeeinheit des Planetengetriebes ein an der Verdichterwalze drehfestes drittes Sonnenrad, ein drittes Hohlrad und an einem drehfest angeordneten dritten Planetenradträger drehbar getragene dritte Planetenräder umfasst.

Dabei kann eine Rückwirkung auf den Drehmomentübertragungszustand zwischen der ersten Planetengetriebeeinheit und der zweiten Planetengetriebeeinheit dadurch erlangt werden, dass das zweite Hohlrad und das dritte Hohlrad zueinander drehfest sind, oder/und dass das erste Hohlrad und der dritte Planetenradträger zueinander drehfest sind.

Gemäß einem besonders vorteilhaften Aspekt des vorangehend erläuterten Aufbaus wird vorgeschlagen, dass die Getriebeeingangswelle und die Vibrationswelle zur gemeinsamen Drehung gekoppelt sind, wobei vorzugsweise diese beiden Wellen zueinander koaxial und auch zur Verdichterwalzendrehachse koaxial positioniert sein können. Dies bedeutet, dass die Vibrationswelle grundsätzlich mit der gleichen Drehzahl rotiert, wie die Getriebeeingangswelle und unter Berücksichtigung des vorangehend erläuterten Grund-Drehzahlumsatzverhältnisses der Übertragungsgetriebeanordnung von 2:1 gewährleistet werden kann, dass die bzw. jede Oszillationswelle mit der halben Drehzahl rotiert, wie die Vibrationswelle. Ferner kann zum Erhalt eines kompakten Aufbaus die Getriebeausgangswelle die Getriebeeingangswelle koaxial umgebend angeordnet sein.

Mit dem vorangehend erläuterten Aufbau wird insbesondere dann, wenn über die Getriebeeingangswelle sowohl das Antriebsdrehmoment für die bzw. jede Oszillationswelle, als auch für die Vibrationswelle bereitgestellt wird, in einfacher Weise und insbesondere unter Miteinbeziehung der Rotation der Verdichterwalze eine Synchronisation der Rotationsbewegungen der Oszillationswellen und der Rotationsbewegung der Vibrationswelle erlangt werden. Bei einem alternativen Aufbau kann, um Oszillationen und Vibrationen voneinander unabhängig erzeugen zu können, vorgesehen sein, dass wenigstens eine Oszillationswelle und die Vibrationswelle voneinander unabhängig zur Drehung antreibbar sind. Dazu kann vorgesehen sein, dass wenigstens einer Oszillationswelle und der Vibrationswelle jeweils ein Wellenantrieb zugeordnet ist. Auch bei derartiger Ausgestaltung kann eine definierte Abstimmung der Rotationsbewegungen der Vibrationswelle einerseits und der Oszillationswellen andererseits auch unter Berücksichtigung des Drehzustands der Verdichterwalze selbst erhalten werden, wozu beispielsweise die Drehzahl der Verdichterwalze erfasst bzw. ermittelt werden kann und dann ansteuerungstechnisch bei den jeweiligen Wellenantrieben dafür gesorgt wird, dass die vorangehend erläuterte Abstimmung der Rotationszustände der Verdichterwelle bzw. der Oszillationswellen beibehalten bleibt.

Eine effiziente Einleitung der Oszillationen in die Verdichterwalze kann dadurch erreicht werden, dass zwei Oszillationswellen vorzugsweise mit einem Winkelabstand von etwa 180° bezüglich der Verdichterwellendrehachse vorgesehen sind. Dabei sind vorteilhafterweise die Oszillationswellen zur Drehung in der gleichen Drehrichtung um ihre jeweiligen Oszillationswellendrehachsen antreibbar.

Das Oszillationsverhalten bzw. Vibrationsverhalten kann hinausgehend über die Variation der hierfür jeweils vorgegebenen Drehzahl einer jeweiligen Welle dadurch beeinflusst werden, dass wenigstens eine Oszillationsunwuchtmasse oder/und wenigstens eine Vibrationsunwuchtmasse eine in Abhängigkeit von der Drehrichtung um die zugeordnete Drehachse variierende Unwucht aufweist.

Eine derartige Variation der Unwucht kann in einfacher Weise dadurch erreicht werden, dass die wenigstens eine Unwuchtmasse eine an der zugeordneten Welle drehfest getragene Basisunwuchtmasse und wenigstens eine in Umfangsrichtung um die zugeordnete Drehachse in begrenztem Winkelbereich bezüglich der Basisunwuchtmasse verlagerbare Variationsunwuchtmasse umfasst. Dabei ist vorteilhafterweise vorgesehen, dass der wenigstens einen Variationsunwuchtmasse deren Umfangsbewegung um die zugeordnete Drehachse bezüglich der Basisunwuchtmasse begrenzende Bewegungsanschläge zugeordnet sind.

Um den durch Variation der Unwucht generierten Effekt der Bereitstellung eines veränderbaren Schwingungsverhaltens möglichst effizient nutzen zu können, gleichwohl jedoch sicherzustellen, dass der jeweilige Schwingungszustand, also Oszillation bzw. Vibration, beibehalten bleibt, wird vorgeschlagen, jede Oszillationsunwuchtmasse oder/und jede Vibrationsunwuchtmasse mit Basisunwuchtmasse und Variationsunwuchtmasse auszubilden.

Die Erfindung betrifft ferner einen Bodenverdichter, umfassend wenigstens eine um eine Verdichterwalzendrehachse drehbare, erfindungsgemäß aufgebaute Verdichterwalze.

Die vorliegende Erfindung wird nachfolgend mit Bezug auf die beiliegenden Figuren beschrieben. Es zeigt:
- Fig. 1: eine Schnittansicht einer nicht erfindungsgemäßen Verdichterwalze für einen Bodenverdichter, geschnitten längs einer Verdichterwalzendrehachse;
- Fig. 2: eine Axialansicht einer Oszillationsmassenanordnung;
- Fig. 3: in prinzipieller Darstellung eine Übertragungsgetriebeanordnung zum Antrieb einer Vibrationswelle und zweier Oszillationswellen vermittels eines einzigen Antriebsmotors;
- Fig. 4: eine Schnittdarstellung einer Verdichterwalze mit einer Übertragungsgetriebeanordnung gemäß Fig. 3;
- Fig. 5: eine Detailansicht der Übertragungsgetriebeanordnung der Verdichterwalze in Fig. 4.

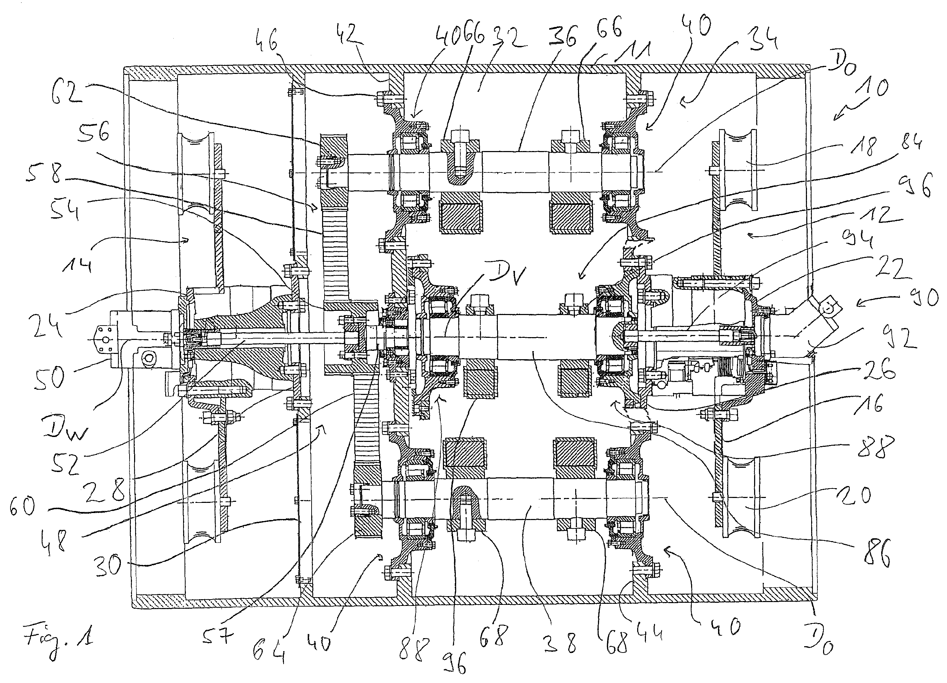

In Fig. 1 ist eine allgemein mit dem Bezugszeichen 10 bezeichnete, nicht erfindungsgemäße Verdichterwalze für einen vorzugsweise selbstfahrenden Bodenverdichter, geschnitten längs einer Verdichterwalzendrehachse Dw dargestellt. Die Verdichterwalze 10 umfasst einen Walzenmantel 11, welcher über an beiden axialen Endseiten in diesen eingreifend positionierte Trägerformationen 12, 14 an einem Verdichterrahmen um die Verdichterwalzendrehachse Dw drehbar getragen ist. Jede Trägerformation 12, 14 umfasst einen plattenartigen Träger 16 und eine Mehrzahl von daran festgelegten elastischen, beispielsweise aus Gummimaterial aufgebauten, Aufhängungselementen 18, 20, welche an dem nicht dargestellten Verdichterrahmen festzulegen sind. Auf diese Art und Weise ist die gesamte Verdichterwalze 10 an dem Verdichterrahmen elastisch und somit auch stoß- bzw. schwingungsdämpfend getragen.

An jeder der Trägerformationen 12, 14 ist ein als Hohlmotor ausgebildeter Antriebsmotor 22, 24 für die Verdichterwalze 10 fest getragen. Die beiden Antriebsmotoren 22, 24, die beispielsweise als Hydraulikmotoren ausgebildet sein können, weisen jeweils ein um die Verdichterwalzendrehachse D_{w} drehbares Ausgangselement 26, 28 auf, welches, wie beispielsweise in Verbindung mit dem in Fig. 1 links positionierten Antriebsmotor 24 dargestellt, über beispielsweise auch elastisch ausgebildete Aufhängungselemente 30 den Walzenmantel 11 trägt bzw. mit diesem verbunden ist.

In dem vom Walzenmantel 11 umschlossenen Innenraum 32 der Verdichterwalze 10 ist axial zwischen den beiden Trägerformationen 12, 14 eine allgemein mit 34 bezeichnete Oszillationsmassenanordnung vorgesehen. Die Oszillationsmassenanordnung 34 umfasst im dargestellten Beispiel zwei bezüglich der Verdichterwalzendrehachse D_{w} in einem Winkelabstand von 180° zueinander angeordnete Oszillationswellen 36, 38. Diese sind an in axialem Abstand zueinander liegenden Bereichen, vorzugsweise jeweils nahe ihren axialen Endbereichen, über jeweilige Lageranordnungen 40 an der Verdichterwalze 10 um jeweilige Oszillationswellendrehachsen Dₒ drehbar getragen. Hierzu können beispielsweise im Inneren der Verdichterwalze 10 und durch Verschweißung am Walzenmantel 11 festgelegt jeweilige scheibenartige Träger 42, 44 in bezüglich der Verdichterwalzendrehachse D_{w} axialem Abstand angeordnet sein. In diesen Trägern 42, 44 können Aussparungen bzw. Öffnungen oder Zwischenräume gebildet sein, in welche die Lageranordnungen 40 eingreifend positioniert werden können. Die Festlegung der Lageranordnungen 40 an diesen Trägern 42, 44 kann beispielsweise durch Schraubbolzen 46 erfolgen. Dabei ist die Positionierung der beiden Oszillationswellen 36, 38 derart, dass ihre Oszillationswellendreh - achsen Dₒ zueinander und auch zur Verdichterwalzendrehachse D_{w} parallel liegen.

Ein allgemein mit 48 bezeichneter Wellenantrieb für die Oszillationswellen 36, 38 umfasst einen Antriebsmotor 50, welcher beispielsweise an dem als Hohlmotor ausgebildeten Antriebsmotor 24 für die Verdichterwalze 10 getragen ist. Eine Antriebswelle 52 dieses Antriebsmotors 50 durchsetzt den Antriebsmotor 24 für die Verdichterwalze 10 vorzugsweise koaxial zur Verdich - terwalzendrehachse D_{w} und ist in ihrem über das Ausgangselement 28 des Antriebsmotors 24 axial hinausstehenden Bereich an eine Antriebsscheibenformation 54 eines Riemenantriebs 56 des Wellenantriebs 48 beispielsweise durch Verschraubung bzw. Verklemmung angebunden. Über einen mit dieser Antriebsscheibenformation 54 gekoppelten Lagerzapfen 57 kann die Antriebswelle 52 beispielsweise am Träger 42 unter Zwischenlagerung eines Wälzkörperlagers oder dergleichen drehbar gelagert sein.

Die Antriebsscheibenformation 54 ist beispielsweise an ihrem Außenumfang mit Verzahnung ausgebildet und wirkt mit zwei axial nebeneinanderliegend um diese herum geführten Antriebsriemen 58, 60 zusammen. An ihren jeweiligen radial äußeren Endbereichen sind diese Antriebsriemen 58, 60 um jeweilige ebenfalls mit Verzahnung ausgebildete Abtriebsscheiben 62, 64 herum geführt. Diese Abtriebsscheiben 62, 64 sind an den Oszillationswellen 36, 38 beispielsweise durch Verschraubung in einem über eine jeweilige Lageranordnung 40 hervorstehenden Endbereich festgelegt.

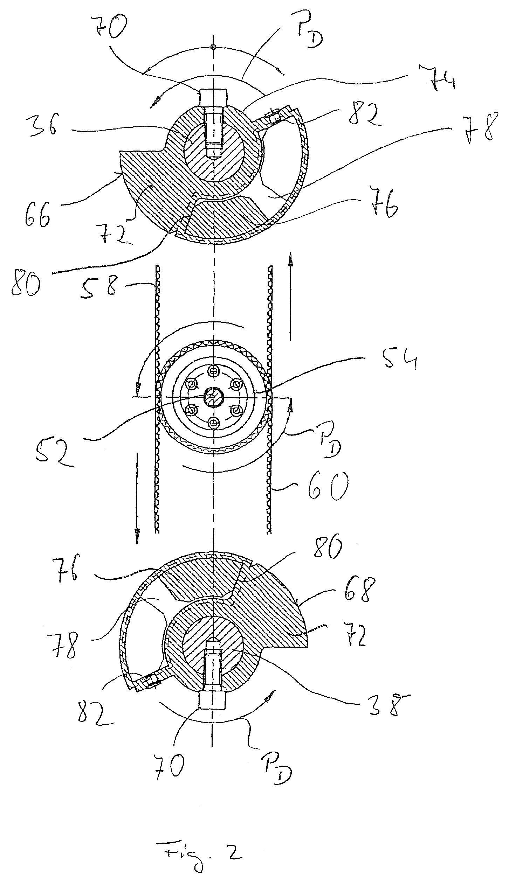

Wie die Fig. 2 dies zeigt, führt die symmetrische Anordnung der Antriebsriemen 58, 60 um die jeweiligen Drehachsen Dw bzw. Dₒ dazu, dass bei Rotation der Antriebswelle 52 in einer durch Pfeile P_{D} in Fig. 2 indizierten Drehrichtung die beiden Oszillationswellen 36, 38 sich in entsprechender Drehrichtung P_{D}, zueinander, also auch in gleicher Drehrichtung, drehen.

An jeder Oszillationswelle 36, 38 sind im dargestellten Beispiel zwei Oszilla - tionsunwuchtmassen 66 bzw. 68 mit axialem Abstand zueinander vorgesehen. Vorzugsweise sind die Oszillationsunwuchtmassen 66 der Oszillationswelle 36 und die Oszillationsunwuchtmassen 68 der Oszillationswelle 38 derart beschaffen, dass sie in Zuordnung zur jeweiligen Oszillationswelle 36 bzw. 38 die gleiche Unwucht generieren, im dargestellten Beispiel jedoch eine Phasenverschiebung von 180° zueinander aufweisen. Dies kann beispielsweise dadurch erreicht werden, dass alle Unwuchtmassen 66, 68 zueinander identisch aufgebaut sind. Auf diese Art und Weise wird sichergestellt, dass die beiden Oszillationswellen 36, 38 bei Antrieb durch den An - triebsmotor 50 in im Wesentlichen identischer Weise bzw. auch im Wesentlichen identischem Ausmaß arbeiten bzw. zur Erzeugung einer periodischen Oszillationsbewegung, hervorgerufen durch ein alternierend in Umfangsrich - tung um die Verdichterwalzendrehachse D_{w} entstehendes Drehmoment, arbeiten.

Jede Oszillationsunwuchtmasse 66 bzw. 68 umfasst eine beispielsweise durch einen Schraubbolzen 70 an der zugeordneten Oszillationswelle 36 bzw. 38 festgelegte Basisunwuchtmasse 72. Diese kann mit einem ringartigen Körperbereich 74 die zugeordnete Oszillationswelle 36 oder 38 umgreifen. Durch den ringartigen Körperbereich 74 kann der Schraubbolzen 70 hindurch und in die zugeordnete Oszillationswelle 36 bzw. 38 eingeschraubt sein. Allgemein ist die Basisunwuchtmasse 72 so aufgebaut, dass sie einen bezüglich einer jeweiligen Oszillationswellendrehachse D ₒ exzentrischen Massenschwerpunkt bereitstellt.

In Zuordnung zu der Basisunwuchtmasse 72 ist eine Variationsunwuchtmasse 76 vorgesehen. Diese ist in einer beispielsweise an bzw. in der Basisunwuchtmasse 72 ausgebildeten, sich ringartig um die zugeordnete Oszillationswellendrehachse Dₒ erstreckenden Bewegungskammer 78 grundsätzlich in Umfangsrichtung um die Oszillationswellendrehachse Dₒ bewegbar aufgenommen. Die Kammer 78 ist an den beiden Umfangsendbereichen durch jeweilige Bewegungsanschläge 80, 82 für die darin aufgenommene Variationsunwuchtmasse 76 in Umfangsrichtung begrenzt. Die Variationsunwuchtmasse 76 wird sich dabei jeweils an demjenigen der Bewegungsanschläge 80, 82 abstützen, welcher in einem jeweiligen Drehzustand der Variationsunwuchtmasse 76 nachläuft. Bei Drehung in der in Fig. 2 indizierten Drehrichtung P_{D} ist dies der Bewegungsanschlag 80, so dass in diesem Drehzustand die Variationsunwuchtmasse 76 die in schraffierter Art dargestellte Positionierung einnehmen wird. Dreht sich die Antriebswelle 52 in entgegengesetzter Drehrichtung, so drehen sich auch die Oszillationswellen 36, 38 und mit diesen die Basisunwuchtmassen 72 in entgegengesetzter Drehrichtung. Die jeweils in Zuordnung zu einer Basisunwuchtmasse 72 vorgesehene Variationsunwuchtmasse 76 wird dann die in Fig. 2 nicht schraffierte Positionierung einnehmen, in welcher sie am Bewegungsanschlag 82 abgestützt ist.

Durch die drehrichtungsabhängige Variierbarkeit der Lage einer jeweiligen Variationsunwuchtmasse 76 bezüglich der zugeordneten Basisunwuchtmasse 72 wird es möglich, die Lage des Massenschwerpunkts einer jeweiligen Oszillationsunwuchtmasse 66 bzw. 68 bezüglich der Drehachse Dₒ zu variieren, was eine entsprechende Änderung der Unwucht an einer jeweiligen Oszillationswelle 36 bzw. 38 mit sich bringt. Somit wird es möglich, durch Auswahl der Drehrichtung der Oszillationswellen 36, 38 und die dabei hervorgerufene Variation der Unwucht der jeweiligen Oszillationsunwuchtmassen 66 bzw. 68 das Schwingungsverhalten der Oszillationsmassenanordnung 34 zu verändern, so dass beispielsweise bei Drehung in der Drehrich - tung P_{D} ein bevorzugter Einsatz mit einer Oszillationsfrequenz von 30 Hz ermöglicht wird, während bei Drehung in der entgegengesetzten Richtung ein bevorzugter Einsatz mit einer Oszillationsfrequenz im Bereich von 36 Hz bevorzugt ermöglicht ist. Auch eine Variation der erreichbaren Schwingungsamplitude kann damit einhergehen. Somit kann das Schwingungsverhalten der Oszillationsmassenanordnung 34 an verschiedene Arten von zu verdichtendem Untergrund optimiert angepasst werden.

In der in Fig. 1 erkennbaren Verdichterwalze 10 ist ferner eine allgemein mit 84 bezeichnete Vibrationsmassenanordnung vorgesehen. Diese umfasst eine zentral in der Verdichterwalze 10 angeordnete Vibrationswelle 86, die beispielsweise in ihren beiden axialen Endbereichen über jeweilige Lageran - ordnungen 88 bezüglich des Walzenmantels 11 drehbar getragen ist. Hierzu können beispielsweise wieder die in Fig. 1 erkennbaren Träger 42, 44 genutzt werden, an welchen die Lageranordnungen 88 beispielsweise durch Verschraubung festgelegt sein können. Auch ist es beispielsweise möglich, die Vibrationswelle 86 in ihrem dem Antriebsmotor 22 nahe liegenden Endbereich bezüglich des Ausgangselements 26 desselben drehbar zu lagern. Dabei ist die Positionierung derart, dass eine Vibrationswellendrehachse D_{V} der Verdichterwalzendrehachse D_{w} entspricht.

Der Vibrationswelle 86 ist ein Wellenantrieb 90 zugeordnet. Dieser umfasst eine an dem Antriebsmotor 22 für die Verdichterwalze 10 getragenen Antriebsmotor 92, dessen Antriebswelle 94 sich durch den als Hohlmotor ausgebildeten Antriebsmotor 22 koaxial zur Verdichterwalzendrehachse D_{w} hindurch erstreckt. In ihrem über den Antriebsmotor 22 hinaus stehenden Bereich ist die Antriebswelle 94 mit der Vibrationswelle 86 beispielsweise durch Verschraubung bzw. Verklemmung drehfest verbunden.

An der Vibrationswelle 86 sind im dargestellten Beispiel in axialem Abstand zueinander zwei Vibrationsunwuchtmassen 96 vorgesehen. Diese können hinsichtlich des prinzipiellen Aufbaus so ausgestaltet sein, wie vorangehend mit Bezug auf die Oszillationsunwuchtmassen 66 bzw. 68 erläutert. Das heißt, auch die Vibrationsunwuchtmassen 96 können zum Bereitstellen einer Variabilität ihrer Unwucht jeweils mit einer an der Vibrationswelle 86 festzu - legenden Basisunwuchtmasse und einer in Umfangsrichtung zwischen zwei Anschlägen bezüglich dieser bewegbaren Variationsunwuchtmasse ausgebildet sein. Je nach Drehrichtung der Antriebswelle 94 kann auch dabei die Unwucht der Vibrationsmassenanordnung 84 verändert werden, um auch bei der Erzeugung von Vibrationen, also Radialschwingungen bezüglich der Verdichterwalzendrehachse D_{w}, eine Auswahl bzw. Anpassung des Schwingungszustands an verschiedene Untergrundarten erhalten zu können.

Wie in Fig. 1 zeichnerisch angedeutet, können die Vibrationsunwuchtmassen 96 hinsichtlich ihrer Größe und somit der dadurch bereitgestellten Unwucht sich von den Oszillationsunwuchtmassen 66 bzw. 68 unterscheiden. Auch könnte selbstverständlich in Zuordnung zur Vibrationsmassenanordnung 84 einerseits und zur Oszillationsmassenanordnung 34 andererseits jeweils eine andere, insbesondere bezüglich einander sich unterscheidende Anzahl an Unwuchtmassen bei den jeweiligen Wellen vorgesehen werden. Auch dadurch kann bei der Erzeugung der verschiedenen Schwingungszustände, also einer Oszillationsbewegung um die Verdichterwalzendrehachse D_{w} einerseits und einer Vibrationsbewegung radial bezüglich der Verdichterwalzendrehachse D_{w} andererseits, eine verbesserte Anpassbarkeit an die zu erfüllenden Verdichtungsanforderungen erreicht werden. Eine Zwangsverkoppelung zwischen den Betriebsarten Oszillation und Vibration ist nicht gegeben. Insbesondere wird es möglich, die Vibrationsmassenanordnung 84 und die Oszillationsmassenanordnung 34 voneinander unabhängig zu betreiben, da jeder dieser beiden Anordnungen ein separater und auch voneinander unabhängig betreibbarer Wellenantrieb 90 bzw. 48 zugeordnet ist. So kann die Oszillationsmassenanordnung 34 immer dann betrieben werden, wenn dies erforderlich bzw. vorteilhaft ist, ebenso wie die Vibrationsmassenanordnung 84. Selbstverständlich ist auch ein gleichzeitiges Betreiben die - ser beiden Anordnungen 34, 84 möglich.

Da, ebenso wie die Antriebsmotoren 22, 24 für die Verdichterwalze 10, die Antriebsmotoren 50, 92 für die Oszillationsmassenanordnung 34 bzw. die Vibrationsmassenanordnung 84 vorzugsweise als Hydraulikmotoren ausgebildet sind, können sie leicht in den Hydraulikkreislauf integriert werden, wel - cher in einem Bodenverdichter im Allgemeinen vorhanden ist, so dass es ebenso leicht möglich ist, durch entsprechende Ansteuerungen von Hydraulikventilen die Antriebsmotoren 50, 92 mit der hierfür jeweils auch gewünschten Drehzahl in Betrieb zu setzen bzw. zu deaktivieren.

Es sei darauf hingewiesen, dass selbstverständlich im Bereich der Oszillationsmassenanordnung oder/und der Vibrationsmassenanordnung im Vergleich zum dargestellten Ausgestaltungsbeispiel im Umfang der vorliegenden Erfindung verschiedenste Variationen vorgenommen werden können. So müssen nicht notwendigerweise bei diesen Anordnungen die bzw. alle Unwuchtmassen mit der vorangehend erläuterten Variabilität ausgebildet sein. Auch starre, hinsichtlich der Positionierung ihres Massenschwerpunkts bezüglich einer jeweiligen Drehachse nicht veränderbare Unwuchtmassen können grundsätzlich zum Einsatz gelangen. Auch können die Anzahl und die Positionierung der Unwuchtmassen an den jeweiligen Wellen anders gewählt sein, als dargestellt. Ferner könnte selbstverständlich anstelle des Riemenantriebs für die beiden Oszillationswellen ein Kettenantrieb, ein Zahnradantrieb oder dergleichen gewählt werden.

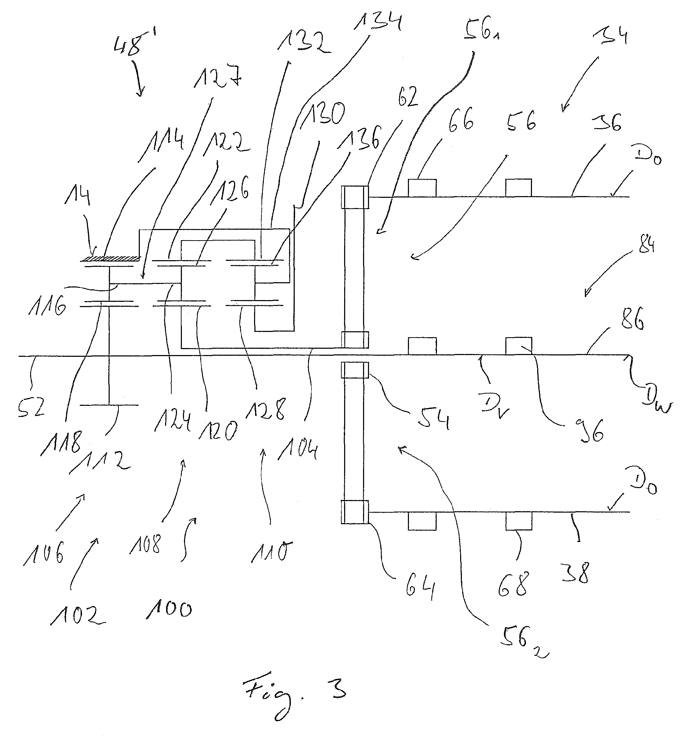

In Fig. 3 ist in prinzipieller Darstellung ein alternativer Aufbau eines Wellenantriebs 48' dargestellt, durch welchen sowohl die beiden Oszillationswellen 36, 38, als auch die Vibrationswelle 86 zur Drehung um ihre jeweiligen Wel - lendrehachsen D_{O}, D_{V} angetrieben werden können.

Der Wellenantrieb 48' umfasst eine Getriebeeingangswelle 52, die mit einer Antriebswelle eines Antriebsmotors, beispielsweise des vorangehend mit Bezug auf die Fig. 1 erläuterten Antriebsmotors 50, drehfest gekoppelt sein kann bzw. durch diese auch bereitgestellt sein kann. Die Antriebswelle 52, welche vorzugsweise koaxial liegt zur Vibrationswelle 86 und damit auch zur Verdichterwalzendrehachse D_{w}(siehe Fig. 1), kann an ihrem der Vibrationswelle 86 nahe gelegenen Endbereich mit dieser zur gemeinsamen Drehung verkoppelt sein, beispielsweise durch axial ineinander einführbare Verzahnungen.

Der Wellenantrieb 48' umfasst eine allgemein mit 100 bezeichnete Übertragungsgetriebeanordnung, deren Antriebswelle 52 einerseits die Getriebeein - gangswelle eines Planetengetriebes 102 bereitstellt, andererseits, wie bereits dargelegt, die Vibrationswelle 86 direkt antreibt. Eine Getriebeaus - gangswelle 104 des Planetengetriebes 102 liegt zur Getriebeeingangswelle, also zur Antriebswelle 52, vorzugsweise koaxial und treibt über die damit verkoppelte Antriebsscheibenformation 54 und den Riementrieb 56 die beiden Oszillationswellen 36, 38 zur Drehung an. Es sei hier darauf hingewie - sen, dass, ähnlich wie bei in der Fig. 1 dargestellten Ausgestaltungsform, auch hier der Riementrieb 56 in Zuordnung zur Oszillationswelle 36 einen ersten Riementrieb 56₁ und in Zuordnung zur Oszillationswelle 38 einen zweiten Riementrieb 56₂ umfasst. Wie nachfolgend noch erläutert, kann dabei die Ausgestaltung derart sein, dass durch Relativdimensionierung der Antriebsscheibenformation 54, welche selbstverständlich in Zuordnung zu jedem der Riementriebe 56₁, 56₂ eine eigenständige Antriebsscheibe bzw. einen eigenständigen Antriebsscheibenbereich umfassen kann, zu den Abtriebsscheiben 62, 64 ein Drehzahlumsetzverhältnis von 2:1 vorgesehen ist, also eine Drehzahluntersetzung erzeugt wird. Es sei an dieser Stelle ferner darauf hingewiesen, dass der Riementrieb 56, also der erste bzw. der zweite Riementrieb 56₁, 56₂, mit einem bzw. mehreren Keil- oder Zahnriemen ausgebildet sein kann. Auch die Ausgestaltung der Riementriebe 56₁, 56₂ als Kettentriebe ist möglich. In diesem Falle sind die Antriebsscheiben bzw. Abtriebsscheiben als Zahnscheiben ausgebildet und die Riemen jeweils als Ketten.

Das Planetengetriebe 102 umfasst drei axial, also in Richtung der Verdichterwalzendrehachse D_{w} aufeinander folgend positionierte Planetengetriebeeinheiten 106, 108, 110. Die dem Antriebsmotor am nächstliegend positionierte erste Planetengetriebeeinheit 106 umfasst ein mit der Antriebswelle 52, also der Getriebeeingangswelle, drehfestes erstes Sonnenrad 112 sowie ein erstes Hohlrad 114. Dieses ist grundsätzlich drehfest gehalten, rotiert also nicht um die Verdichterwalzendrehachse. Beispielsweise kann das erste Hohlrad 114 an der Trägerformation 14 vorgesehen bzw. festgehalten sein. Die erste Planetengetriebeeinheit 106 umfasst ferner an einem ersten Planetenradträger 116 drehbar getragene erste Planetenräder 118. Diese stehen sowohl mit dem ersten Sonnenrad 112, als auch dem ersten Hohlrad 114 in Kämmeingriff.

Die zweite Planetengetriebeeinheit 108 umfasst ein mit der Getriebeausgangswelle 104 drehfestes zweites Sonnenrad 120 sowie ein zweites Hohlrad 122, welches grundsätzlich um die Verdichterwalzendrehachse D_{w} frei drehbar ist. Ferner umfasst die zweite Planetengetriebeeinheit 108 einen zweiten Planetenradträger 124, an dem in Umfangsrichtung um die Verdichterwalzendrehachse D_{w} verteilt mehrere zweite Planetenräder 126 drehbar getragen sind.

Man erkennt in Fig. 3, dass der zweite Planetenradträger 124 und der erste Planetenradträger 116 durch einen gemeinsamen Planetenradträger 127 der beiden Planetengetriebeeinheiten 106, 108 bereitgestellt sind, wodurch die Drehmomentübertragungsverbindung zwischen der Getriebeeingangswelle, also der Antriebswelle 52, und der Getriebeausgangswelle 104 bereitgestellt ist.

Die dritte Planetengetriebeeinheit 110 umfasst ein drittes Sonnenrad 128. Dieses ist mit der Verdichterwalze 10 drehfest und kann beispielsweise an einem mit dem Walzenmantel fest verbundenen, scheibenartigen Träger 130 drehfest vorgesehen sein. Das dritte Sonnenrad 128 dreht sich somit zusammen mit der gesamten Verdichterwalze 10 um die Verdichterwalzendrehachse D_{w}. Die dritte Planetengetriebeeinheit 110 umfasst ferner ein drittes Hohl - rad 132, welches mit dem zweiten Hohlrad 122 drehfest ist und somit grundsätzlich zusammen mit diesem um die Verdichterwalzendrehachse D_{w} drehbar ist. Ferner umfasst die dritte Planetengetriebeeinheit 110 einen dritten Planetenradträger 134. An diesem sind in Umfangsrichtung um die Verdichterwalzendrehachse D_{w} verteilt dritte Planetenräder 136 drehbar getragen. Der dritte Planetenradträger 134 ist grundsätzlich drehfest angeordnet. Beispielsweise kann auch dieser an der Trägerformation 14 getragen sein, so dass er auch drehfest bezüglich des ersten Hohlrads 114 ist.

Durch das Planetengetriebe 102 wird die Drehbewegung der Antriebswelle 52 auf die Getriebeausgangswelle 104 und von dieser über die Riementriebe 56₁, 56₂ auf die Oszillationswellen 36, 38 übertragen. Erfolgt diese Dreh - momentübertragung in einem Zustand, in welchem die Verdichterwalze 10 nicht um die Verdichterwalzendrehachse D_{w} rotiert, steht das dritte Sonnenrad 128 fest. Da auch der dritte Planetenradträger 134 grundsätzlich drehfest gehalten ist, kann in diesem Zustand auch das dritte Hohlrad 132 und somit auch das zweite Hohlrad 122 sich nicht um die Verdichterwalzendrehachse D_{w} drehen. Dies bedeutet, dass bei Rotation der Antriebswelle 52 und damit des ersten Sonnenrads 112 die ersten Planetenräder 118, sich am ersten Hohlrad 114 abstützend, in Umfangsrichtung um die Verdichterwalzendrehachse D_{w} bewegt werden und damit auch den gemeinsamen Planetenradträger 127 in Umfangsrichtung bewegen. Dies wiederum erzwingt eine Abrollbewegung der zweiten Planetenräder 126 am in diesem Zustand drehfest gehaltenen zweiten Hohlrad 122, wodurch das zweite Sonnenrad 120 zur Drehung angetrieben wird.

Sind, wie dies in Fig. 3 schematisch angedeutet, die beiden Sonnenräder 112, 120 einerseits und auch die beiden Hohlräder 114, 122 andererseits gleich dimensioniert, was selbstverständlich auch eine jeweils zueinander gleiche Dimensionierung der ersten Planetenräder 118 und der zweiten Planetenräder 126 erzwingt, wird die Drehbewegung der Antriebswelle 122 ohne Veränderung der Drehzahl auf die Getriebeausgangswelle 104 übertragen. Dies bedeutet, dass in diesem Zustand das Drehzahlumsetzverhältnis des Planetengetriebes 102 bei 1:1 liegt. Da, wie vorangehend beschrieben, das Drehzahlumsetzverhältnis der Riementriebe 56₁, 56₂ bei 2:1 liegt, drehen sich die beiden Oszillationswellen 36, 38 mit der halben Drehzahl der Antriebswelle 52 und damit auch der halben Drehzahl der Vibrationswelle 86. Somit ist dafür gesorgt, dass in diesem Zustand, also bei vorliegendem Grund-Drehzahlumsetzverhältnis der Übertragungsgetriebeanordnung 100 bei jeder durch die Rotation der Oszillationswellen 36, 38 erzeugten Os - zillationsperiode zwei Vibrationsperioden der Vibrationswelle 86 erzeugt werden, wobei jeweils eine Vibrationsperiode für die Hin-Bewegung der Oszillation und eine für die Zurück-Bewegung der Oszillation erzeugt wird.

Dreht sich die Verdichterwalze 10 bei nicht rotierender Antriebswelle 52 um die Verdichterwalzendrehachse D_{w}, so erfolgt dies in einem Zustand, in welchem das erste Sonnenrad 112 bezüglich des ersten Hohlrads 114 drehfest ist, so dass auch der erste Planetenradträger 116 und mit diesem der zweite Planetenradträger 124 sich nicht um die Verdichterwalze D_{w} bewegen wird. Da der dritte Planetenradträger 134 grundsätzlich drehfest gehalten ist, wird die Drehbewegung des mit der Verdichterwalze 10 drehfesten dritten Sonnenrads 128 eine Drehbewegung der dritten Planetenräder 136 um ihre eigenen Drehachsen erzeugen. Dies wiederum erzeugt eine Rotation des dritten Hohlrads 132 um die Verdichterwalzendrehachse D_{w} und damit auch eine entsprechende Rotation des zweiten Hohlrads 122. Da der zweite Planetenradträger 124 sich nicht um die Verdichterwalzendrehachse D_{w} drehen kann, wird die Rotation des zweiten Hohlrads 122 in eine Rotation der zweiten Planetenräder 126 um ihre eigenen Drehachsen umgesetzt, was wiederum eine Rotation des zweiten Sonnenrads 120 und damit der Getriebeausgangswelle 104 erzeugt.

Sind dabei das dritte Sonnenrad 128 und das zweite Sonnenrad 120 einerseits sowie das dritte Hohlrad 132 und das zweite Hohlrad 122 andererseits zueinander jeweils gleich dimensioniert, was wiederum eine gleiche Dimensionierung der dritten Planetenräder 136 und der zweiten Planetenräder 126 erzwingt, wird die Drehung der Verdichterwalze 10 und damit des dritten Sonnenrads 128 in einem Verhältnis von 1:1 auf die Getriebeausgangswelle 104 übertragen, was letztendlich bedeutet, dass die Getriebeausgangswelle 104 sich mit der gleichen Drehazhl drehen wird, wie die Verdichterwalze 10. Die Drehrichtung der Getriebeausgangswelle 104 wird dabei selbstverständ - lich abhängen von der Drehrichtung der Verdichterwalze 10 selbst, so dass bei einer Drehrichtungsumkehr der Verdichterwalze 10, auch eine entsprechende Drehrichtungsumkehr der Getriebeausgangswelle 104 und damit auch der Oszillationswellen 36, 38 erzeugt wird.

Drehen sich sowohl die Verdichterwalze 10, als auch die Antriebswelle 52, im dargestellten Beispiel um die gemeinsame Drehachse D_{w}, führt dies zu einer Überlagerung zweier Drehbewegungen, nämlich einerseits der durch die Rotation der Antriebswelle 52 hervorgerufenen Drehbewegung der Getriebeausgangswelle 104 und andererseits der durch die Rotation des dritten Sonnenrads 128, d. h. der Rotation der Verdichterwalze 10, hervorgerufenen Rotation der Getriebeausgangswelle 104. Diese Überlagerung führt dazu, dass abhängig von der Drehrichtung der Verdichterwalze um die Verdichterwalzendrehachse D_{w} die Drehzahl der Getriebeausgangswelle 104 bezüglich der Drehzahl der Antriebswelle 52, d. h. der Getriebeeingangswelle, entsprechend der Drehzahl der Verdichterwalze 10 erhöht oder verringert wird. Dies wiederum führt zu einer entsprechenden Anpassung der Drehzahl der Oszillationswellen 36, 38 in derartigem Sinne, dass das Drehzahlverhältnis der Drehzahl der Oszillationswellen 36, 38 zur Drehzahl der Vibrationswelle 86 unabhängig von der Drehrichtung der Verdichterwalze einerseits und auch unabhängig von der Rotationsgeschwindigkeit, also der Drehzahl der Verdichterwalze 10 andererseits unverändert bleibt. Dies bedeutet, dass die Oszillationswellen 36, 38 grundsätzlich immer mit der durch das Drehzahlumsetzverhältnis der Riementriebe 56₁, 56₂ vorgegebenen Drehzahl bezüglich der Drehzahl der Vibrationswelle 86 rotieren können, im vorliegen - den Fall mit der halben Drehzahl.

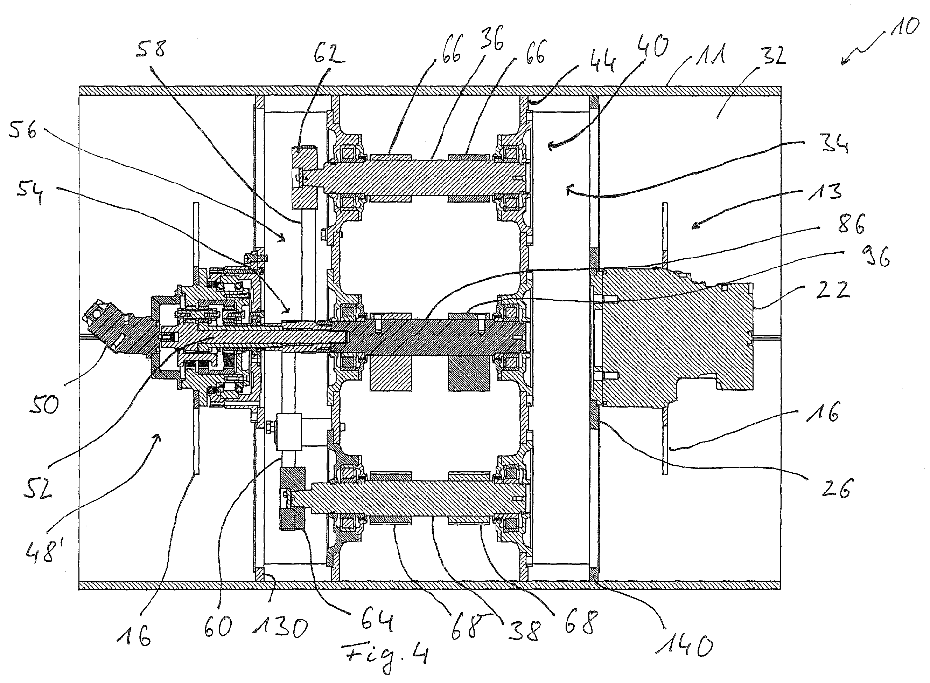

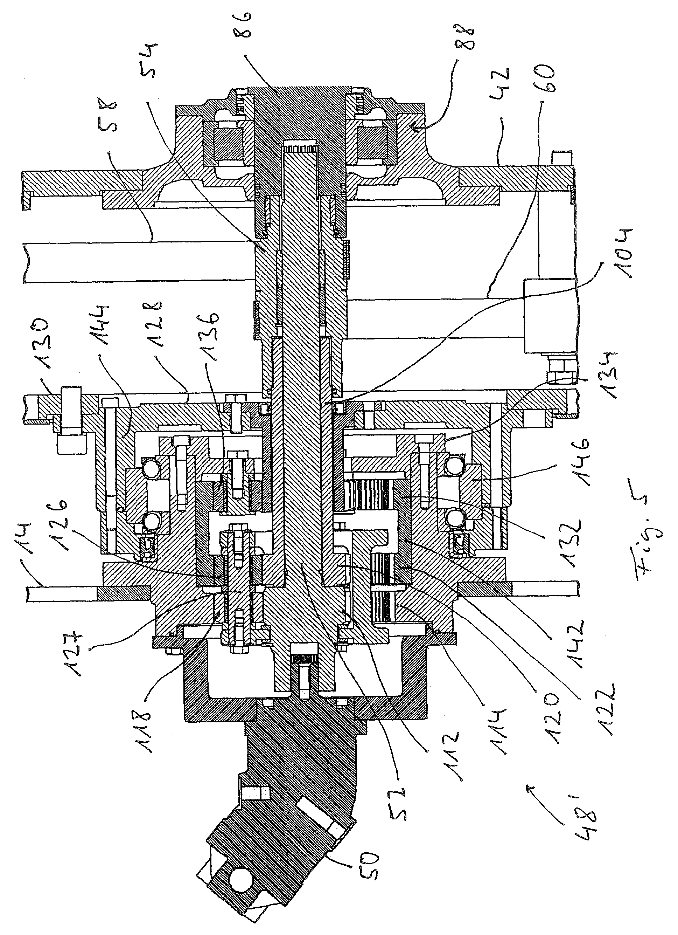

Eine konstruktive Ausführung einer Verdichterwalze mit einem derartigen Wellenantrieb 48' für die Oszillationswellen 36, 38 und die Vibrationswelle 86 wird nachfolgend mit Bezug auf die Fig. 4 und 5 beschrieben. Man erkennt in Fig. 4 die Verdichterwalze 10 mit dem Walzenmantel 11. an den scheibenartigen Trägern 42, 44 sind die Oszillationswellen 36, 38 und die Vibrationswelle 86 drehbar getragen. An einem seitlich außerhalb des scheibenartigen Trägers 44 positionierten weiteren scheibenartigen Träger 140 greift das Ausgangselement 26 des die Verdichterwalze 10 zur Drehung um die Verdichterwalzendrehachse D_{w} antreibenden Antriebsmotors 22 an, welcher in diesem Ausgestaltungsbeispiel der einzige Antrieb für die Verdichter - walze 10 ist. An dem seitlich außerhalb des scheibenartigen Trägers 42 positionierten scheibenartigen Träger 130 ist das beispielsweise mehrteilig ausgebildete dritte Sonnenrad 128 getragen. Erkennbar ist die als Getriebeeingangswelle wirksame Antriebswelle 52, die in ihrem vom Antriebsmotor 50 axial entfernt liegenden Endbereich durch Keilverzahnung oder derglei - chen mit der Vibrationswelle 86 zur gemeinsamen Rotation gekoppelt ist. Die Antriebswelle 52 ist von der Getriebeausgangswelle 104 koaxial umgeben. Diese ist an ihrem von dem Antriebsmotor 50 abgewandt liegenden axialen Endbereich beispielsweise ebenfalls durch Keilverzahnung oder dergleichen mit der Antriebsscheibenanordnung 54 zur gemeinsamen Drehung gekoppelt. Diese kann in ihrem der Vibrationswelle 86 nahe liegenden Endbereich in einer axialen Öffnung derselben aufgenommen und daran radial gelagert sein.

An der Trägerformation 14 ist das erste Hohlrald 114 beispielsweise durch Verschraubung festgelegt. An einem vom Antriebsmotor 50 abgewandten axialen Endbereich ist am ersten Hohlrad 114 der dritte Planetenradträger 134 beispielsweise durch Verschraubung festgelegt, so dass auch dieser drehfest bezüglich der Trägerformation 14 ist. Das erste Sonnenrad 112 kann als integraler Bestandteil der Antriebswelle 52 ausgebildet sein und steht in Kämmeingriff mit den ersten Planetenrädern 118. Diese wiederum sind an dem gemeinsamen Planetenradträger 127 zusammen mit den zweiten Planetenrädern 126 drehbar getragen.

Das zweite Sonnenrad 120 kann als integraler Bestandteil der als Hohlwelle ausgebildeten Getriebeausgangswelle 104 ausgebildet sein. Das zweite Hohlrad 122 und das dritte Hohlrad 132 können als integraler Bestandteil ei - nes gemeinsamen Hohlrads 142 ausgebildet sein, so dass diese mit den zweiten Planetenrädern 126 einerseits sowie den dritten Planetenrädern 136 andererseits in Kämmeingriff stehen können.

Man erkennt weiter, dass das dritte Sonnenrad 128 bzw. ein Bestandteil desselben einen axialen Lageransatz 144 aufweist, welcher über ein Wälzkörperlager 146 am Außenumfang des an der Trägerformation 14 festgelegten ersten Planetenradträgers 114 drehbar gelagert ist. Auf diese Art und Weise ist die gesamte Verdichterwalze 10 in diesem Bereich bezüglich der Trägerformation 14 drehbar gelagert. Hier ist also eine Funktionenverschmelzung vorgesehen, welche zu einem einfachen und kompakten Aufbau beiträgt.

## Patentansprüche

1. Verdichterwalze für einen Bodenverdichter, umfassend eine Oszillationsmassenanordnung (34) mit wenigstens einer um eine zu einer Verdichterwalzendrehachse (Dw) exzentrische Oszillationswellendrehachse (Do) drehbaren Oszillationswelle (36, 38) mit wenigstens einer Oszillationsunwuchtmasse (66, 68) und eine Vibrationsmassenanordnung (84) mit einer um eine Vibrationswellendrehachse (Dv) drehbaren Vibrationswelle (86) mit wenigstens einer Vibrationsunwuchtmasse (96), wobei wenigstens eine Oszillationswelle (36, 38) und die Vibrationswelle (86) in der Verdichterwalze (10) zur Drehung antreibbar getragen sind,
wobei ein Wellenantrieb (48') zum Antreiben wenigstens einer Oszillationswelle (36, 38) zur Drehung um deren Oszillationswellendrehachse (Do) vorgesehen ist, wobei der Wellenantrieb (48') einen Antriebsmotor (50) und eine Übertragungsgetriebeanordnung (100) umfasst,
**dadurch gekennzeichnet, daß** ein Drehzahlumsetzverhältnis der Übertragungsgetriebeanordnung (100) in Abhängigkeit von einer Drehzahl der Verdichterwalze (10) um die Verdichterwalzendrehachse (Dw) variiert, wobei vorzugsweise bei nicht um die Verdichterwalzendrehachse (Dw) rotierender Verdichterwalze (10) ein Drehzahlumsetzverhältnis der Übertragungsgetriebeanordnung (100) 2:1 ist.

2. Verdichterwalze nach Anspruch 1,
**dadurch gekennzeichnet, dass** die Vibrationswellendrehachse (Dv) zur Verdichterwalzendrehachse (Dw) im Wesentlichen konzentrisch ist,
oder/und
dass die Oszillationswellendrehachse (Do) wenigstens einer Oszillationswelle (36, 38) zur Vibrationswellendrehachse (Dv) oder/und zur Verdichterwalzendrehachse (Dw) im Wesentlichen parallel ist.

3. Vedichterwalze nach Anspruch 1 oder 2,
**dadurch gekennzeichnet, dass** bei Drehung der Verdichterwalze (10) in einer ersten Drehrichtung das Drehzahlumsetzverhältnis der Übertragungsgetriebeanordnung (100) bezüglich eines bei nicht um die Verdichterwalzendrehachse (Dw) rotierender Verdichterwalze (10) vorgesehenen Grund-Drehzahlumsetzverhältnisses erhöht ist und bei Drehung der Verdichterwalze (10) in einer zur ersten Drehrichtung entgegengesetzten zweiten Drehrichtung das Drehzahlumsetzverhältnis der Übertragungsgetriebeanordnung (100) bezüglich des Grund-Drehzahlumsatzverhältnisses verringert ist.

4. Verdichterwalze nach einem der Ansprüche 1 bis 3,
**dadurch gekennzeichnet, dass** die Übertragungsgetriebeanordnung (100) ein Planetengetriebe (102), vorzugsweise mit drei Planetengetriebeeinheiten (106, 108, 110) jeweils mit Sonnenrad, Hohlrad und damit in Kämmeingriff stehenden Planetenrädern an einem Planetenradträger, mit einer Getriebeeingangswelle (52) und einer Getriebeausgangswelle (104) umfasst.

5. Verdichterwalze nach Anspruch 4,
**dadurch gekennzeichnet, dass** die Übertragungsgetriebeanordnung (100) in Zuordnung zu jeder Oszillationswelle (36, 38) jeweils einen Riementrieb (56₁, 56₂) mit einer durch die Getriebeausgangswelle (52) zur Drehung antreibbaren Antriebsscheibe (54) und einer die Oszillationswelle (36, 38) zur Drehung antreibenden Abtriebsscheibe (62, 64) und wenigstens einem Übertragungsriemen (58, 60) umfasst, wobei vorzugsweise ein Drehzahlumsetzverhältnis jedes Riementriebs (56₁, 56₂) 2:1 ist.

6. Verdichterwalze nach Anspruch 4 oder 5,
**dadurch gekennzeichnet, dass** eine erste Planetengetriebeeinheit (106) des Planetengetriebes (102) ein mit der Getriebeeingangswelle (52) drehfestes erstes Sonnenrad (112), ein drehfest angeordnetes erstes Hohlrad (114) und an einem ersten Planetenradträger (116) drehbar getragene erste Planetenräder (118) umfasst.

7. Verdichterwalze nach einem der Ansprüche 4 bis 6,
**dadurch gekennzeichnet, dass** eine zweite Planetengetriebeeinheit (108) des Planetengetriebes (102) ein an der Getriebeausgangswelle (104) drehfestes zweites Sonnenrad (120), ein zweites Hohlrad (122) und an einem zweiten Planetenradträger (124) drehbar getragene zweite Planetenräder (126) umfasst.

8. Verdichterwalze nach Anspruch 7,
**dadurch gekennzeichnet, dass** der erste Planetenradträger (116) und der zweite Planetenradträger (124) durch einen gemeinsamen Planetenradträger (127) der ersten Planetengetriebeeinheit (106) und der zweiten Planetengetriebeeinheit (108) bereitgestellt sind.

9. Verdichterwalze nach einem der Ansprüche 4 bis 8,
**dadurch gekennzeichnet, dass** eine dritte Planetengetriebeeinheit (110) des Planetengetriebes (102) ein an der Verdichterwalze (10) drehfestes drittes Sonnenrad (128), ein drittes Hohlrad (132) und an einem drehfest angeordneten dritten Planetenradträger (134) drehbar getragene dritte Planetenräder (136) umfasst.

10. Verdichterwalze nach 9, sofern auf Anspruch 6 oder 7 rückbezogen,
**dadurch gekennzeichnet, dass** das zweite Hohlrad (122) und das dritte Hohlrad (132) zueinander drehfest sind,
oder/und
dass das erste Hohlrad (114) und der dritte Planetenradträger (134) zueinander drehfest sind.

11. Verdichterwalze nach einem der Ansprüche 4 bis 10,
**dadurch gekennzeichnet, dass** die Getriebeeingangswelle (52) und die Vibrationswelle (86) zur gemeinsamen Drehung gekoppelt sind,
oder/und
dass die Getriebeausgangswelle (104) die Getriebeeingangswelle (52) koaxial umgibt.

12. Verdichterwalze nach einem der Ansprüche 1 bis 11,
**dadurch gekennzeichnet, dass** zwei Oszillationswellen (36, 38) vorzugsweise mit einem Winkelabstand von etwa 180° bezüglich der Verdichterwellendrehachse (Dw) vorgesehen sind, wobei vorzugsweise die Oszillationswellen (36, 38) zur Drehung in der gleichen Drehrichtung (P_{D}) um Ihre jeweiligen Oszillationswellendrehachsen (Do) antreibbar sind,
oder/und
dass wenigstens eine Oszillationsunwuchtmasse (66, 68) oder/und wenigstens eine Vibrationsunwuchtmasse (96) eine in Abhängigkeit von der Drehrichtung um die zugeordnete Drehachse (Do, Dv) variierende Unwucht aufweist, wobei
vorzugsweise die wenigstens eine Unwuchtmasse (66, 68, 96) eine an der zugeordneten (36, 38, 86) Welle drehfest getragene Basisunwuchtmasse (72) und wenigstens eine in Umfangsrichtung um die zugeordnete Drehachse (Do, Dv) in begrenztem Winkelbereich bezüglich der Basisunwuchtmasse (72) verlagerbare Variationsunwuchtmasse (76) umfasst, wobei ferner vorzugsweise der wenigstens einen Variationsunwuchtmasse (76) deren Umfangsbewegung um die zugeordnete Drehachse (Do, Dv) bezüglich der Basisunwuchtmasse (72) begrenzende Bewegungsanschläge (80, 82) zugeordnet sind.

13. Verdichterwalze nach Anspruch 12,
**dadurch gekennzeichnet, dass** jede Oszillationsunwuchtmasse (66, 68) oder/und jede Vibrationsunwuchtmasse (96) mit Basisunwuchtmasse (72) und Variationsunwuchtmasse (76) ausgebildet ist.

14. Bodenverdichter, umfassend wenigstens eine um eine Verdichterwalzendrehachse (Dw) drehbare Verdichterwalze (10) nach einem der vorhergehenden Ansprüche.

## Claims

1. Compactor roller for a soil compactor, comprising an oscillation mass arrangement (34) with at least one oscillation shaft (36, 38) that can be rotated about an oscillation shaft rotary axis (Do) which is eccentric to a compactor roller rotary axis (Dw), with at least one oscillation unbalanced mass (66, 68) and a vibration mass arrangement (84) with a vibration shaft (86) which can be rotated about a vibration shaft rotary axis (Dv) with at least one vibration unbalanced mass (96), wherein at least one oscillation shaft (36, 38) and the vibration shaft (86) are carried in the compactor roller (10) where they can be driven for rotation,
wherein
a shaft drive (48') is provided for driving at least one oscillation shaft (36, 38) for rotation about its shaft rotary axis (Do), wherein said shaft drive (48') comprises a drive motor (50) and a transmission gear arrangement (100), **characterized in that** a rotational speed transmission ratio of the transmission gear arrangement (100) varies in relation to a number of revolutions of the compactor roller (10) about said compactor roller rotary axis (Dw), wherein preferably, when the compactor roller does not rotate about said compactor roller rotary axis (Dw) a rotational speed transmission ratio of said transmission gear arrangement (100) is 2:1.

2. Compactor roller according to claim 1,
**characterized in that** said vibration shaft rotary axis (Dv) is substantially concentric to said compactor roller rotary axis (Dw)
or/and
**in that** the oscillation shaft rotary axis (Do) of at least one oscillation shaft (36, 38) is substantially parallel to said vibration shaft rotary axis (Dv) or/and said compactor roller rotary axis (Dw).

3. Compactor roller according to claim 1 or 2,
**characterized in that** when the compactor roller (10) is rotated in a first direction of rotation, said rotational speed transmission ratio of said transmission gear arrangement (100) is increased in relation to a basic speed transmission ratio provided for a compactor roller (10) which is not rotating about said compactor roller rotary axis (Dw) and **in that** when the compactor roller (10) is rotated in a second direction of rotation opposed to the first direction, said speed transmission ratio of said rotational transmission gear arrangement (100) is reduced in relation to the basic rotational speed transmission ratio.

4. Compactor roller according to one of claims 1 to 3,
**characterized in that** said transmission gear arrangement (100) comprises a planetary transmission (102), preferably with three planetary transmission units (106, 108, 110), each with sun gear, ring gear and planetary gears in meshing engagement at a planetary gear carrier, with a gear input shaft (52) and a gear output shaft (104).

5. Compactor roller according to claim 4,
**characterized in that** said transmission gear arrangement (100) comprises in association to each oscillation shaft (36, 38), a belt drive (56₁, 56₂) with a drive disk (54) which can be driven for rotation by said gear output shaft (52) and a driven disk (62, 64) driving the oscillation shaft (36, 38) for rotation and at least one transmission belt (58, 60), wherein preferably a rotational speed transmission ratio of each belt drive (56₁, 56₂) is 2:1.

6. Compactor roller according to claim 4 or 5,
**characterized in that** a first planetary transmission unit (106) of said planetary transmission (102) comprises a first sun gear (112), non-rotatable with said gear input shaft (52), a first non-rotatable ring gear (114) and first planetary gears (118) which are rotatably carried at a first planetary gear carrier (116).

7. Compactor roller according to one of claims 4 to 6,
**characterized in that** a second planetary transmission unit (108) of said planetary transmission (102) comprises a second sun gear (120), non-rotatable with said gear unit output shaft (104), a second ring gear (122) and second planetary gears (126) which are rotatably carried at a second planetary gear carrier (124).

8. Compactor roller according to claim 7,
**characterized in that** the first planetary gear carrier (116) and the second planetary gear carrier (124) are provided by a common planetary gear carrier (127) of the first planetary transmission unit (106) and the second planetary transmission unit (108).

9. Compactor roller according to one of claims 4 to 8,
**characterized in that** a third planetary transmission unit (110) of said planetary transmission (102) comprises a third sun gear (128), non-rotatable with said compactor roller (10), a third ring gear (132) and third planetary gears (136) which are rotatably carried at a third non-rotatable planetary gear carrier (134).

10. Compactor roller according to 9, if referring to claim 6 or 7, **characterized in that** the second ring gear (122) and the third ring gear (132) are non-rotatable in relation to one another,
or/and
**in that** the first ring gear (114) and the third planetary gear carrier (134) are non-rotatable in relation to one another.

11. Compactor roller according to one of claims 4 to 10,
**characterized in that** said gear input shaft (52) and said vibration shaft (86) are coupled for common rotation,
or/and
**in that** said gear output shaft (104) coaxially surrounds said gear input shaft (52).

12. Compactor roller according to one of claims 1 to 11,
**characterized in that** two oscillation shafts (36, 38) are provided, preferably with an angular distance of approximately 180° in relation to said compactor rotary axis (Dw), wherein preferably said oscillation shafts (36, 38) can be driven for a rotation in the same direction of rotation (P_{D}) about their respective oscillation shaft rotary axes (Do),
or/and
**in that** at least one oscillation unbalanced mass (66, 68) or/and at least one vibration unbalanced mass (96) comprise an unbalance varying depending on the direction of rotation about the associated rotary axis (Do, Dv), wherein preferably the at least one unbalanced mass (66, 68, 96) comprises at least one basic unbalanced mass (72) carried non-rotatably at the associated shaft (36, 38, 86), and at least one variation unbalanced mass (76) displaceable in the circumferential direction about the associated rotary axis (Do, Dv) in a defined angular range, wherein furthermore preferably movement stops (80, 82) are associated to the at least one variation unbalanced mass (76) limiting its circumferential movement about the associated rotary axis (Do, Dv) in relation to said basic unbalanced mass (72).

13. Compactor roller according to claim 12,
**characterized in that** each oscillation unbalanced mass (66, 68) or/and each vibration unbalanced mass (96) are designed with said basic unbalanced mass (72) and said variation unbalanced mass (76).

14. Soil compactor, comprising at least one compactor roller (10) which can be rotated about a compactor roller rotary axis (Dw) according to one of the preceding claims.

## Revendications

1. Cylindre de compactage pour un compacteur de sol, comprenant un arrangement de masse d'oscillation (34) avec au moins un arbre d'oscillation (36, 38) qui peut être tourné autour d'un axe de rotation d'arbre d'oscillation (Do) qui est excentrique par rapport à un axe de rotation du cylindre de compactage (Dw), avec au moins une masse non-équilibrée d'oscillation (66, 68) et un arrangement de masse de vibration (84) avec un arbre de vibration (86) qui peut être tourné autour d'un axe de rotation d'arbre de vibration (Dv) avec au moins une masse non-équilibrée de vibration (96), où au moins un arbre d'oscillation (36, 38) et l'arbre de vibration (86) sont supportés dans le cylindre de compactage (10) où ils peuvent être entraînés en rotation,
où
un entraînement d'arbre (48') est prévu pour entraîner au moins un arbre d'oscillation (36, 38) en rotation autour de l'axe de rotation de l'arbre d'oscillation (Do), où l'entraînement d'arbre (48') comprend un moteur d'entraînement (50) et un arrangement d'engrenage de transmission (100), **caractérisé en ce qu'**un rapport de transmission de vitesse de rotation de l'arrangement d'engrenage de transmission (100) varie en fonction d'un nombre de révolutions du cylindre de compactage (10) autour de l'axe de rotation (Dw), un rapport de la transmission du nombre de révolutions de l'arrangement d'engrenage de transmission (100) étant de préférence de 2:1 pour un cylindre de compactage (10) qui ne pivote pas autour de l'axe de rotation du cylindre de compactage (Dw).

2. Cylindre de compactage selon la revendication 1,
**caractérisé par** l'axe de rotation de l'arbre de vibration (Dv) étant essentiellement concentrique à l'axe de rotation du cylindre de compactage (Dw) ou/et
par
l'axe de rotation de l'arbre d'oscillation (Do) d'au moins un arbre d'oscillation (36, 38) étant parallèl à l'axe de rotation d'arbre de vibration (Dv) ou/et à l'axe de rotation du cylindre de compactage (Dw).

3. Cylindre de compactage selon la revendication 1 ou 2,
**caractérisé en ce que** lorsque le cylindre de compactage (10) est tourné dans un premier sens de rotation, le rapport de transmission de la vitesse de l'arrangement d'engrenage de transmission (100) par rapport à une proportion de base de transmission de la vitesse pour un cylindre de compactage (10) qui ne tourne pas autour de l'axe de rotation du cylindre de compactage (Dw) est augmenté et lorsque le cylindre de compactage (10) est tourné dans un deuxième sens de rotation, opposé au premier sens de rotation, le rapport de transmission de la vitesse de l'arrangement d'engrenage de transmission (100) par rapport à une proportion de base de transmission de la vitesse est réduit.

4. Cylindre de compactage selon une des revendications 1 à 3,
**caractérisé par** l'arrangement d'engrenage de transmission (100) comprenant un engrenage planétaire (102), de préférence avec trois unités d'engrenage planétaires (106, 108, 110), chacune avec un engrenage solaire, une couronne à denture intérieure et des engrenages planétaires en prise d'engrènement à un support d'engrenages planétaires, avec un arbre d'entrée de transmission (52) et un arbre de sortie de transmission (104).

5. Cylindre de compactage selon la revendication 4,
**caractérisé en ce que** l'arrangement d'engrenage de transmission (100) comprend, en association à chaque arbre d'oscillation (36, 38), une transmission à courroie (56₁, 56₂) avec un disque d'entraînement (54) qui peut être entraîné en rotation par l'arbre de sortie de transmission (52) et un disque entraîné (62, 64) entraînant l'arbre d'oscillation (36, 38) en rotation et au moins une courroie de transmission (58, 60), le rapport de transmission de la vitesse de chaque transmission à courroie (56₁, 56₂) étant 2:1.

6. Cylindre de compactage selon la revendication 4 ou 5,
**caractérisé en ce qu'**une première unité d'engrenage planétaire (106) de l'engrenage planétaire (102) comprend un premier engrenage solaire (112) relié de manière non-rotative à l'arbre de sortie de transmission (52), une première couronne à denture intérieure (114) arrangée de manière non-rotative et des engrenages planétaires (118) supportés de manière rotative à un premier support d'engrenage planétaire (116).

7. Cylindre de compactage selon une des revendications 4 à 6,
**caractérisé en ce qu'**une deuxième unité d'engrenage planétaire (108) de l'engrenage planétaire (102) comprend un deuxième engrenage solaire (120) relié de manière non-rotative à l'arbre de sortie de transmission (104), une deuxième couronne à denture intérieure (122) et des deuxième engrenages planétaires (126) supportés de manière rotative à un deuxième support d'engrenages planétaires (124).

8. Cylindre de compactage selon la revendication 7,
**caractérisé par** le premier support d'engrenages planétaires (116) et le deuxième support d'engrenages planétaires (124) étant prévus par un support d'engrenages planétaires commun (127) de la première unité d'engrenage planétaire (106) et de la deuxième unité d'engrenage planétaire (108).

9. Cylindre de compactage selon une des revendications 4 à 8,
**caractérisé en ce qu'**une troisième unité d'engrenage planétaire (110) de l'engrenage planétaire (102) comprend un troisième engrenage solaire (128) relié de manière non-rotative au cylindre de compactage (10), une troisième couronne à denture intérieure (132) et des troisième engrenages planétaires (136) supportés de manière rotative à un troisième support d'engrenages planétaires (134) arrangé de manière non-rotative.

10. Cylindre de compactage selon 9, en référence à la revendication 6 ou 7,
**caractérisé en ce que** la deuxième couronne à denture intérieure (122) et la troisième couronne à denture intérieure (132) sont reliées de manière non-rotative,
ou/et
**en ce que** la première couronne à denture intérieure (114) et le troisième support d'engrenages planétaires (134) sont reliés de manière non-rotative.

11. Cylindre de compactage selon une des revendications 4 à 10,
**caractérisé en ce que** l'arbre d'entrée de transmission (52) et l'arbre de vibration (86) sont couplés pour une rotation commune,
ou/et
**en ce que** l'arbre de sortie de transmission (104) entoure coaxialement l'arbre d'entrée de transmission (52).

12. Cylindre de compactage selon une des revendications 1 à 11,
**caractérisé par** deux arbres d'oscillation (36, 38) étant prévus de préférence avec une distance angulaire d'environ 180° par rapport à l'axe de rotation du cylindre de compactage (Dw), où les arbres d'oscillation (36, 38) peuvent de préférence être entraînés en rotation dans la même direction de rotation (P_{D}) autour de leurs axes de rotation d'arbre d'oscillation (Do),
ou/et
par au moins une masse non-équilibrée d'oscillation (66, 68) ou/et au moins une masse non-équilibrée de vibration (96) ayant un balourd variable en fonction de la direction de rotation autour de l'axe de rotation (Do, Dv) associé, où de préférence ladite au moins une masse non-équilibrée (66, 68, 69) comprend au moins une masse non-équilibrée de base (72) supportée de manière non-rotative à l'arbre associé (36, 38, 86) et au moins une masse non-équilibrée de variation (76) qui peut être déplacée dans la direction circonférentielle autour de l'axe de rotation (Do, Dv) associé, dans une région angulaire définie, des arrêts de mouvement (80, 82) étant de préférence associés à ladite au moins une masse non-équilibrée de variation (76), limitant son mouvement circonférentiel autour de l'axe de rotation (Do, Dv) associé en relation à la masse non-équilibrée de base (72).

13. Cylindre de compactage selon la revendication 12,
**caractérisé par** chaque masse non-équilibrée (66, 68) ou/et chaque masse non-équilibrée de vibration (96) étant formées avec une masse non-équilibrée de base (72) et une masse non-équilibrée de variation (76).

14. Compacteur de sol, comprenant au moins un cylindre de compactage (10) qui peut être tourné autour d'un axe de rotation du cylindre de compactage (Dw) selon une des revendications précédentes.
